(19) **Europäisches Patentamt**

**European Patent Office**

**Office européen des brevets**

(11) **EP 1 142 156 B1**

(12) **EUROPEAN PATENT SPECIFICATION**

(45) Date of publication and mention
of the grant of the patent:
**12.04.2006 Bulletin 2006/15**

(51) Int Cl.:
***H04B 7/005*** (2006.01)

(21) Application number: **99964869.4**

(22) Date of filing: **14.12.1999**

(86) International application number:
**PCT/SE1999/002358**

(87) International publication number:
**WO 2000/038351 (29.06.2000 Gazette 2000/26)**

(54) **METHOD IN A TELECOMMUNICATION SYSTEM**

VERFAHREN IN EINEM TELEKOMMUNIKATIONSSYSTEM

PROCEDE POUR SYSTEME DE TELECOMMUNICATION

(84) Designated Contracting States:
**AT BE CH CY DE DK ES FI FR GB GR IE IT LI LU
MC NL PT SE**

(30) Priority: **18.12.1998 WOPCT/IB98/02070
23.07.1999 SE 9902774**

(43) Date of publication of application:
**10.10.2001 Bulletin 2001/41**

(73) Proprietor: **TELEFONAKTIEBOLAGET LM
ERICSSON (publ)
164 83 Stockholm (SE)**

(72) Inventors:
• **JOHANSSON, Staffan
S-974 55 Luleaa (SE)**
• **NORDSTRÖM, Peter
SE-972 42 Lulea (SE)**

(74) Representative: **Kühn, Friedrich Heinrich
Ericsson AB
Patent Unit Radio Networks
164 80 Stockholm (SE)**

(56) References cited:
**EP-A2- 0 682 418      WO-A1-96/03813
WO-A1-97/37457      WO-A1-98/49785**

## Description

## FIELD OF THE INVENTION

The present invention relates generally to methods in telecommunication systems, more particularly to methods for downlink power control in the base station of a code division multiple access (CDMA) communication system.

## BACKGROUND OF THE INVENTION

In code division multiple access (CDMA) communication systems, a plurality of base stations cover each a certain geographic area and provide communication services to users within such areas. Characteristic for CDMA-systems is that the common transmission medium is shared between different users by assigning specific and unique code sequences to the uplink and downlink channels between base station and user equipment. These code sequences are used by the transmitters to transform signals into wideband spread spectrum signals. In the receiver units, base station or user equipment, said wideband signals from a specific transmitter are retransformed into the original bandwidth by using the same code sequence as that transmitter while signals marked with different codes remain wideband signals and, thus, are interpreted by the receiver as part of the background noise.

An aspect specific to the multiple access technique used in CDMA relates to the fact that all users transmit wideband signals potentially at the same time and using the same bandwidth. Thus, one limiting factor in CDMA-based systems is a decreasing signal-noise ratio in the communication channels due to an increasing interference level caused by other transmitters. Said signal interference level per cell results from transmitters within said cell as well as from transmitters in the neighbouring cells. From this it becomes apparent that power control, both of uplink signals and downlink signals, is crucial in order to achieve a maximised system capacity and high quality of services. This implies for the uplink signals that the transmission power of the user equipment must be controlled, e.g., in order to avoid that users close to their serving base station dominate users at a longer distance and in order to allow an optimised number of users within the limitations of the acceptable interference level. For the downlink signals power control is required, i.a, in order to minimize the interference to other cells and, accordingly, to compensate against interference from other cells. By this means, a base station is able to serve users preferably at any location within the cell and without a too strong contribution to the interference level of the neighbouring cells. Yet another important aspect for downlink power control relates to the fact that increasing power values lead to a spreading of the signal spectrum. Therefore, in order to avoid a spreading of the total downlink signal spectrum outside the allowed frequency range that is reserved for the downlink signals of a CDMA-based communication system, the total allocated downlink power for a base station must be limited to a maximum power level.

As thus the downlink transmission power of a base station is a limited resource there is a need for methods to allocate appropriate power levels to the various downlink channels in such a way that the total allocated power remains below said maximum power level. One solution for said downlink power control relates to a fixed allocation of a maximum downlink power per user such that the sum of the allocated power levels remains below the maximum threshold. This minimises the risk that said maximum power level is exceeded but results in poor system capacity due to a lack of flexibility.

WO 97/37457 discloses power control in a multi rate telecommunication system.

## SUMMARY OF THE INVENTION

It is a first object of the present invention to achieve an efficient method for management of the downlink power resources of a base station.

It is another object of the present invention to achieve a method in a downlink power limited system for power allocation to each of the downlink channels of those users that have an established data connection such that the level of the allocated downlink power for the base station as a whole remains below a permitted maximum downlink power level.

It is still another object of the present invention to achieve a method for allocation of said downlink power and for adjustment to an available downlink power level individually for each of said downlink user data channels.

It is yet another object of the present invention to achieve a method that can limit the total allocated downlink power without degrading the transmission quality of the downlink user data channels.

Briefly, these and other objects of the present invention are accomplished by a method that periodically performs an estimation of the total allocated downlink power on basis of radio environmental parameters and the momentarily applied bit rate for the downlink user data channels. If said allocated power exceeds a threshold given by the permitted maximum downlink power, the bit rate of user data channels to appropriately selected users are adjusted.

The invention is founded on the insight that the transmission power for each of the downlink user data channels of a base station depends on the transmitted signal energy and the transmission bit rate. Thus, the allocated downlink transmission power can be controlled by adjusting either said signal energy or, preferably, said transmission bit rate for a certain channel or group of channels.

As a first advantage, the present invention enables a base station to manage the allocated downlink power without exceeding the permitted maximum downlink transmission power.

It is another advantage of the present invention that said allocated downlink power can be adjusted in accordance with, e.g., individual user demands or network conditions and without degrading channel quality.

Yet another advantage of the present invention is an improved service coverage of users by means of a decreased dropped call rate. The allocated downlink power for the user data channels can be regulated in such a way that the number of users receiving a good service quality can be noticeably increased.

Thus, it is still another advantage of the present invention relates to optimized information throughput and/or system capacity.

Other objects, advantages and novel features of the invention will become apparent from the following detailed description of the invention when considered in conjunction with the accompanying drawings and claims.

**BRIEF DESCRIPTION OF THE DRAWINGS**

For a better understanding, reference is made to the following drawings and preferred embodiments of the invention.

Figure 1 shows an overview of a CDMA-based communication system and more particularly a cell including a plurality of user equipments that are served by a base station.

Figure 2 illustrates an embodiment of the method according to the present invention. The allocated downlink power is adjusted by means of adjusting the bit rates that are assigned to the various downlink user data channels.

Figure 3 shows a flowchart of the method according to the present invention.

DETAILED DESCRIPTION

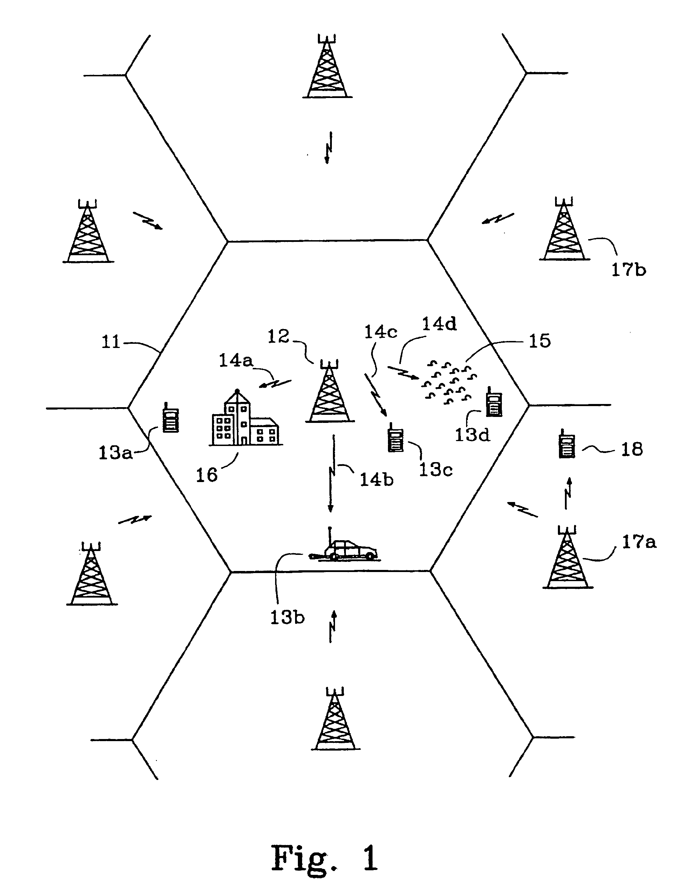

Figure 1 shows an overview of a CDMA-based radio communication system divided into a plurality of cells 11, each of which equipped with a base station 12 for providing communication services, e.g., speech or data connections, to and from user equipments 13a-13d within the coverage area of the base station 12. The present invention refers to the downlink channels 14a-14d from the base station 12 to those of said user equipments 13a-13d that have an established data connection. It relates in particular to controlling and efficiently allocating power for said downlink channels that are applied for said data connections.

For a base station 12, the downlink power Pout that must be allocated in order to serve a given number of user equipments 13a-13d within its cell 11 can be expressed as

$$P_{out} = \sum_{i=1}^{N} P_{i,speech} + \sum_{i=1}^{M} P_{i,data} < P_{max} \ .$$

Here, the total allocated downlink power $P_{out}$ is interpreted as the sum of transmission powers $P_i$ that are allocated to a number $N$ of downlink speech channels and a number $M$ of downlink user data channels. The allocated downlink power Pout for both types of downlink channels must not exceed a permitted maximum downlink power level $P_{max}$ that is conditioned by the undesired spectrum spreading as described above. However, $P_{max}$ can also be defined as a target power level below said critical value depending on the actual system load. By this means, the total permitted downlink power can be used in cases of a sufficiently high system capacity while said target value can be reduced at times with less traffic.

As speech connections must meet certain minimum requirements and, thus, allocate in advance a certain amount $P_{speech}$ of the permitted downlink power $P_{max}$, the maximum available share of said permitted downlink power that remains for the downlink user data channels varies in dependence of the number N of downlink speech channels. Accordingly, the sum of downlink powers for each of the user data channels must be adjusted in order to remain below said maximum available share of the downlink power. Within the scope of the present invention, the allocated power $P_{i,data}$ per downlink user data channel is expressed by means of the transmitted signal energy per bit $E_{b,i}$ and the transmission bit rate $R_i$, i.e.

$$\sum_{i=1}^{M} P_{i,data} = \sum_{i=1}^{M} E_{b,i} \cdot R_i \ .$$

A first aspect of the present invention relates to the fact that the total allocated downlink power $P_{out}$ of the base station 12 can be adjusted to said permitted maximum downlink power $P_{max}$ preferably by means of individually adjusting the power levels $P_{i,data}$ for each of the downlink user data channels rather than determining static maximum downlink power levels for these channels. This implies that each of said downlink user data channels is adjusted according to its specific requirements for the amount of allocated power. Said requirements mainly depend on demands from the individual users 13a-13d and the given conditions of the radio environment for said channels. Other requirements may relate to the network utilization in total, e.g. with respect to system capacity or information throughput.

The impact of the individual user of a data connection relates in general to the subscription type, e.g., with respect to disposable services or guaranteed service quality, and more specific to the actually demanded service, e.g., with respect to required bandwidth or user activity. Environmental parameters that must be taken into consideration with respect to radio propagation conditions are, e.g., general terrain characteristics and different kinds of obstacles, e.g. trees 15 or buildings 16, that influence the radio channel. Due to an increased mobility of certain users 13b said environmental parameters can change rapidly and must be adjusted accordingly fast. Other impacts result from the total signal interference level due to environmental noise or transmissions from other users within the cell. In addition, especially at the cell borders, a user equipment 13d may also be influenced by signal interference from, e.g., base stations 17a,17b or users 18 in neighbouring cells while the quality of the downlink channel from the serving base station may decrease. Thus, by means of said first aspect of the method according to the present invention it is possible to dedicate the maximum available share of the downlink power that can be used for data traffic individually to the downlink user data channels within the limitations of the permitted downlink power *Pmax* while still being able to meet in a flexible way the varying requirements as described above.

A second aspect of the present invention relates to the fact that said allocated power $P_{i,data}$ per downlink user data channel can principally be adjusted by using two different alternatives: One alternative is to adjust the power level by varying the transmitted signal bit energy $E_{b,i}$ of one or more of said downlink channels. However, as decreasing power values result in a lower quality of the radio channel due to a decreasing signal-to-interference ratio $E_b/I_0$, this alternative may result in a decreasing information throughput, due to a possibly increasing number of frame errors and packet retransmissions. Additionally, due to the insufficient signal power level that is received by some of the user equipments, the call drop rate can increase, especially at the cell borders. Another alternative, which is preferred according to the present invention, is to adjust the transmission bit rate $R_i$ for one or more of said downlink user data channels while the signal power is kept at a level that is sufficiently high to maintain a given target signal-to-interference ratio $E_b/I_0$. For decreasing bit rates, this alternative also results in a decreasing information throughput; however, as the transmission bit rate can be adjusted according to the actual needs of the individual users while the transmission error rate remains unchanged, this solution is more convenient and causes, e.g., less extra signalling.

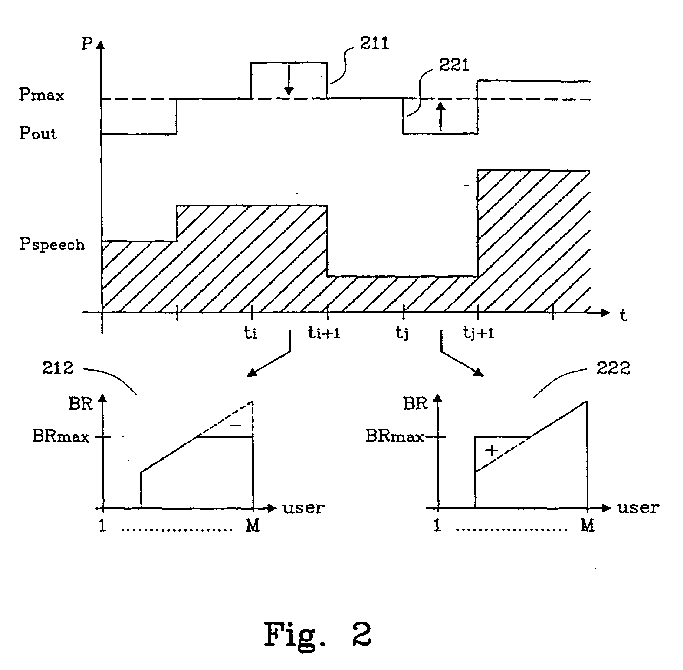

Figure 2 presents in a first diagram the total allocated downlink power $P_{out}$ of a base station as a function of time. Said allocated downlink power is composed of shares for the downlink power allocated to all speech connections, $P_{speech}$, and for the downlink power allocated to all data connections, $P_{data}$. In compliance with the first aspect of the invention, the method according to the invention is intended to control the total allocated downlink power $P_{out}$ by individually adjusting the power levels of the downlink user data channels within the range of the maximum available power that can be used for data traffic. This is done by means of estimating the allocated downlink power $P_{out}$ for an initial setting of the bit rates of said data channels and controlling said power at certain times $t_i$. If necessary, said bit rates are adjusted in an iterative procedure in compliance with the second aspect of the invention. If said total allocated downlink power $P_{out}$ exceeds the permitted maximum downlink power level $P_{max}$ by a certain amount 211, as shown for time interval $[t_i,t_{i+1}]$, said adjustment for the downlink user data channels implies a limitation to the threshold level $P_{max}$. Correspondingly, as long as the allocated downlink power remains below said permitted downlink power level $P_{max}$ by a certain amount 221, as shown for time interval $[t_j,t_{j+1}]$, the remaining power may be allocated in addition to the downlink user data channels. Thus, yet another aspect of the present invention relates to approaches for selection of appropriate downlink user data channels that are to be adjusted in order to achieve an optimized allocation of the maximum available downlink power resources. Selection criterions relate to user demands, radio environmental conditions, and network maintenance as described above. In the example as shown in diagrams 212 and 222, the applied selection criterion is the bit rate (BR) that is assigned to the downlink user data channels [1,M]. If $P_{out}$ is larger than $P_{max}$, the diagram 212 indicates that the assigned bit rate is reduced to a maximum bit rate $(BR_{max})$ for those downlink user data channels that exceed said maximum value. If $P_{out}$ is less than $P_{max}$, the diagram 222 indicates that the assigned bit rate is increased to a maximum bit rate $(BR_{max})$ for those downlink user data channels that are below said maximum value. Other suitable selection criterions will be described in the following. The selection of bit rates for the various downlink user data channels in a cell is performed at certain times, e.g. every 10ms, preferably with larger periods than the reporting intervals of the systems power control for uplink and downlink channels.

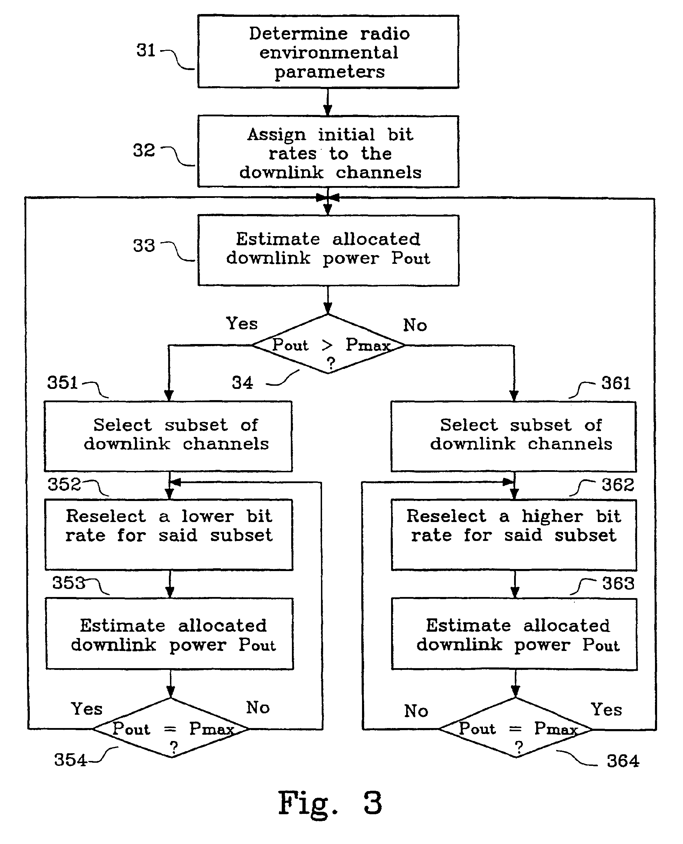

Figure 3 shows a flowchart representing the various steps of the method according to the present invention. Initially, block 31, before starting the method according to the present invention some radio environmental parameters need to be calculated for each downlink user data channel in order to be able to perform the bit rate selection for said channels. In order to keep track on the momentary transmission quality, pathloss and signal-to-interference ratio must be determined for each downlink user data channel. The pathloss corresponds to the signal attenuation due to the distance of a user equipment to its serving base station. This value is calculated from the downlink signal strength that is reported by the user equipment of that downlink channel. The signal-to-interference ratio ($E_b/I_0$ target) is calculated in the downlink outer loop power control, which is located either in the network or in the user equipment. Said downlink power control regulates the signal bit energy of the downlink channels to a sufficiently high target value in response to the ratio values for the uplink channel indicated by the user equipment. These values are updated by the system within much shorter time periods than the decision time periods for bit rate selection. Therefore, it can be assumed that said method always applies actually valid values. Other parameters that influence the radio channel are, e.g., external noise, which may be assumed as white Gaussian noise with constant spectral density $N$, and a correlation factor, which describes the correlation between different channels due to an imperfect orthogonality of the applied downlink spreading codes. These values may be considered as constant with respect to the method according to the present invention.

In a next step, block 32, an initial bit rate is assigned to each downlink user data channel. For those channels that have something to send, this is, e.g., the highest possible bit rate. Channels having no data to send choose the lowest possible bit rate that is sufficient to keep the downlink power control running. Hereby, the output traffic from a base station to all downlink user data channels in a subsequent time period can be estimated by cyclically checking the output transmission buffers for each of said downlink channels.

Then, block 33, from these initial settings, a preliminary value for the allocated downlink power is estimated.

Said value for the allocated downlink power $P_{out}$ is compared with the permitted maximum downlink power level $P_{max}$, block 34. As long as the allocated power is less than said permitted power level, the system is presently not downlink power limited.

However, if said estimated value for the- power demand is higher than the permitted downlink power, the system need to adjust the bit rates for one or more of the downlink user data channels to a lower bit rate. This is achieved in an iterative procedure by the steps of selecting a subset of downlink user data channels, block 351, and reselecting the bit rates of these channels, block 352. From these reselected bit rates, an adjusted value is estimated for the total allocated downlink power $P_{out}$, block 353, and said iterative procedure is repeated as long as $P_{out}$ exceeds the permitted maximum downlink power $P_{max}$. Said selection can be done according to certain selection criterions and is described in the following approaches that can be used alone or in combination.

Correspondingly, the method according to the present invention can also be applied when the allocated downlink power $P_{out}$ remains below the threshold given by the permitted maximum downlink power $P_{max}$. Then, the remaining downlink power can be used in order to improve throughput, i.e. an improved service quality by means of an increased bit rate for all or a certain subset of downlink user data channels. This is done by means of an iterative reselection procedure as described above including the steps of selecting a subset of downlink user data channels, block 361, and reselecting the bit rates of said subset to a higher bit rate, block 362. From the reselected bit rates, an adjusted value is estimated for the total allocated downlink power $P_{out}$, block 363, and said iterative procedure is repeated as long as $P_{out}$ not exceeds the downlink power target value, block 364.

In a first approach, each of the downlink user data channels is treated equally with respect to the assigned downlink bit rate per channel. Thus, in cases where the allocated downlink power exceeds the threshold value given by the permitted maximum downlink power, said allocated downlink power is adjusted by means of modifying the transmission characteristics of an appropriate subset of downlink user data channels or, alternatively, of all downlink user data channels. Said appropriate subset may be retrieved by randomly selecting a number of downlink user data channels. In another alternative, a subset is retrieved by cyclically selecting a subset of index values representing starting positions in the downlink transmission buffer for data to be sent on a downlink user data channels. By this means, within certain time periods each of said downlink user data channels has a momentarily decreased bit rate. From the base stations point of view, this approach is easy to implement and to maintain; however, it disregards the fact that the downlink channels to users at various locations in the cell have differing preconditions with respect to their downlink power need. Correspondingly, a first approach in cases where the allocated downlink power level is below the permitted maximum downlink power level is to increase the bit rate equally for each of the active downlink user data channels. However, this implies only a small increase for each of the individual users.

Thus, another approach to select a subset of downlink user data channels relates to the physical properties of said downlink channels as selection criterion, e.g., with respect to the reported pathloss, the needed power level for said downlink channels, or the momentarily assigned bit rate. In case of a necessary reduction of the allocated downlink power, this implies that channels with unacceptable high pathlosses, e.g., at the cell borders, are treated with a lower priority because this relatively small number of users consumes a considerable part of the available downlink power in disadvantage to a plurality of other users. Alternatively, at first those channels are selected having the highest assigned bit-rates and then pathloss and/or needed power level might be taken into consideration. Thus, from the systems point of view, this approach intends to optimize the number of those downlink user data channels to which the base station is able to provide a good downlink channel quality with respect to, e.g., bit rate and pathloss rather than just maximizing the number of supported users. However, for those users that consume too much of the total downlink power the method according to the present invention can indicate the necessity of an alternative treatment. When regarding, e.g., users at the cell borders of a heavy-loaded cell, said method could initiate a handover to a neighbouring cell with less traffic. Correspondingly, if the bit rates are reselected towards a higher bit rate, preferably those downlink channels are selected that already have a good channel quality in order to noticeably increase service quality for these users.

Yet another approach may relate to the user's subscription type, e.g., a prime subscription type guaranteeing at least a certain minimum bit rate at any condition or a low-budget type without any guarantees in point of access or bit rate. Additional user related selection criterions are, e.g., packet arrival time or packet waiting time in order to be able to observe the individual user needs in a better way. This implies that the status of the transmission buffers of the various downlink user data channel is applied as a selection criterion. Thus, users that momentarily request a large amount of data can be assigned a higher bit rate in order to fulfil their momentary need as good as possible and in order to avoid an overflow of the base station's output transmission buffer. Correspondingly, by means of these selection criterions it is avoided that certain users are disregarded over a longer time period.

**Claims**

1. Method in a telecommunication system comprising a plurality of base stations (12, 17a, 17b), each of which providing communication services to a selected number of user equipments (13a, 13b, 13c, 13b) by means of allocated downlink channels (14a, 14b, 14c, 14d), whereof data communication services are provided to a part of said user equipments by means of downlink user data channels having an assigned initial bit rate,
   **characterised in**
   performing in each base station at regular time intervals the steps of
   estimating the total allocated downlink power from all downlink channels of a base station (33),
   selecting (351, 361) or a subset of downlink user data channels to momentarily active users if said total allocated downlink power differs from a permitted maximum downlink power level of a base station,
   adjusting the total allocated downlink power to the permitted maximum downlink power level by means of adjusting the bit rate (352, 362) for said selected downlink user data channels.

2. Method according to claim 1,
   **characterized in**
   selecting all or a subset of downlink user data channels if said total allocated downlink power exceeds said permitted maximum downlink power level of a base station,
   adjusting the selected downlink user data channels by means of assigning a lower bit rate.

3. Method according to claim 2,
   **characterized in**
   selecting a subset of downlink user data channels by means of selecting an appropriate number from amongst the downlink user data channels having an assigned bit rate that exceeds a threshold value.

4. Method according to claim 2,
   **characterized in**
   selecting a subset of downlink user data channels by means of selecting an appropriate number from amongst the downlink user data channels having a pathloss that exceeds a threshold value.

5. Method according to claim 2,
   **characterized in**
   selecting a subset of downlink user data channels by means of selecting an appropriate number from amongst the downlink user data channels to those users without a prime-rate subscription type.

6. Method according to claim 1,
   **characterized in**
   selecting all or a subset of downlink user data channels if said total allocated downlink power is lower than said permitted maximum downlink power level of a base station,
   adjusting the selected downlink user data channels by means of assigning a higher bit rate.

7. Method according to claim 6,
   **characterized in**
   selecting a subset of downlink user data channels by means of selecting an appropriate number from amongst the downlink user data channels having an assigned bit rate that is lower than a threshold value.

8. Method according to claim 6,
   **characterized in**
   selecting a subset of downlink user data channels by means of selecting an appropriate number from amongst the downlink user data channels having a pathloss that is lower than a threshold value.

9. Method according to claim 6,
   **characterized in**
   selecting a subset of downlink user data channels by means of selecting an appropriate number principally from amongst the downlink user data channels to those users having a prime-rate subscription type.

10. Method according to claim 2 or 6,
    **characterized in**
    selecting a subset of downlink user data channels by means of cyclically selecting an appropriate range from index values indicating the starting positions of the downlink transmission buffers for said downlink user data channels.

11. Method according to claim 2 or 6,
    **characterized in**
    selecting a subset of downlink user data channels by means of randomly selecting an appropriate number of downlink user data channels.

**12.** Method according to one of the preceding claims, **characterized in**
selecting a subset of downlink user data channels by means of successively performing a selection of an appropriate number from amongst the downlink user data channels by successively applying more than one selection criterion.

**13.** Method according to one of the preceding claims, **characterized in**
performing said method at regular time intervals that are considerably longer than the reporting intervals for radio channel parameters from the user equipments.

**14.** Method according to claim 4, **characterized in**
initiating a handover to a neighbouring cell for a user equipment having the highest pathloss.

## Patentansprüche

**1.** Verfahren in einem Telekommunikationssystem, umfassend eine Vielzahl von Basisstationen (12, 17a, 17b), wobei jede von diesen Kommunikationsdienste an einer gewählten Anzahl von Benutzergeräten (13a, 13b, 13c, 13d) mit Hilfe von zugeordneten Downlink-Kanälen (14a, 14b, 14c, 14d) bereitstellt, wobei Datenkommunikationsdienste an einem Teil der Benutzergeräte mit Hilfe von Downlink-Benutzerdatenkanälen bereitgestellt werden, die eine zugewiesene anfängliche Bitrate aufweisen, **dadurch gekennzeichnet, dass**
in jeder Basisstation bei regelmäßigen Zeitintervallen die folgenden Schritte ausgeführt werden:

Abschätzen der gesamten zugeordneten Downlink-Leistung von allen Downlink-Kanälen einer Basisstation (33),
Wählen (351, 361) von allen oder eines Untersatzes von Downlink-Benutzerdatenkanälen an momentan aktive Benutzer, wenn sich die gesamte zugeordnete Downlink-Leistung von einem zugelassenen maximalen Downlink-Leistungspegel einer Basisstation unterscheidet, und
Einstellen der gesamten zugeordneten Downlink-Leistung auf den zugelassenen maximalen Downlink-Leistungspegel mit Hilfe einer Einstellung der Bitrate (352, 362) für die gewählten Downlink-Benutzerdatenkanäle.

**2.** Verfahren nach Anspruch 1, **gekennzeichnet durch**
Wählen von allen oder eines Untersatzes von Downlink-Benutzerdatenkanälen, wenn die gesamte zugeordnete Downlink-Leistung den zugelassenen maximalen Downlink-Leistungpegel einer Basisstation übersteigt, und
Einstellen der gewählten Downlink-Benutzerdatenkanäle mit Hilfe einer Zuweisung einer niedrigeren Bitrate.

**3.** Verfahren nach Anspruch 2, **gekennzeichnet durch**
Wählen eines Untersatzes von Downlink-Benutzerdatenkanälen mit Hilfe einer Auswahl einer geeigneten Anzahl aus den Downlink-Benutzerdatenkanälen, die eine zugewiesene Rate aufweisen, die einen Schwellwert übersteigt.

**4.** Verfahren nach Anspruch 2, **gekennzeichnet durch**
Wählen eines Untersatzes von Downlink-Benutzerdatenkanälen mit Hilfe einer Auswahl einer geeigneten Anzahl aus den Downlink-Benutzerdatenkanälen, die einen Pfadverlust aufweisen, der einen Schwellwert übersteigt.

**5.** Verfahren nach Anspruch 2, **gekennzeichnet durch**
Wählen eines Untersatzes von Downlink-Benutzerdatenkanälen mit Hilfe einer Auswahl einer geeigneten Anzahl aus den Downlink-Benutzerdatenkanälen für diejenigen Benutzer ohne einen Teilnahmeberechtigungs-Typ mit einer Hauptrate.

**6.** Verfahren nach Anspruch 1, **gekennzeichnet durch**
Wählen von allen oder eines Untersatzes von Downlink-Benutzerdatenkanälen, wenn die gesamte zugeordnete Downlink-Leistung niedriger als der zugelassene maximale Downlink-Leistungspegel einer Basisstation ist, und
Einstellen der gewählten Downlink-Benutzerdatenkanäle mit Hilfe einer Zuweisung einer höheren Bitrate.

**7.** Verfahren nach Anspruch 6, **gekennzeichnet durch**
Wählen eines Untersatzes von Downlink-Benutzerdatenkanälen mit Hilfe einer Auswahl einer geeigneten Anzahl aus den Downlink-Benutzerdatenkanälen, die eine zugewiesene Rate aufweisen, die niedriger als ein Schwellwert ist.

**8.** Verfahren nach Anspruch 6, **gekennzeichnet durch**
Wählen eines Untersatzes von Downlink-Benutzerdatenkanälen mit Hilfe einer Auswahl einer geeigneten Anzahl aus den Downlink-Benutzerdatenkanälen, die einen Pfadverlust aufweisen, der niedriger

**9.** Verfahren nach Anspruch 6, **gekennzeichnet durch**

Wählen eines Untersatzes von Downlink-Benutzerdatenkanälen mit Hilfe einer Auswahl einer geeigneten Anzahl hauptsächlich aus den Downlink-Benutzerdatenkanälen für diejenigen Benutzer, die einen Teilnahmeberechtigungs-Typ mit einer Hauptrate aufweisen.

**10.** Verfahren nach Anspruch 2 oder 6, **gekennzeichnet durch** Wählen

eines Untersatzes von Downlink-Benutzerdatenkanälen mit Hilfe einer zyklischen Auswahl eines geeigneten Bereichs aus Indexwerten, die die Startpositionen der Downlink-Übertragungspuffer für die Downlink-Benutzerdatenkanäle anzeigen.

**11.** Verfahren nach Anspruch 2 oder 6, **gekennzeichnet durch** Wählen

eines Untersatzes von Downlink-Benutzerdatenkanälen mit Hilfe einer zufälligen Auswahl einer geeigneten Anzahl von Downlink-Benutzerdatenkanläen.

**12.** Verfahren nach irgendeinem der vorangehenden Ansprüche, **gekennzeichnet durch**

Auswählen eines Untersatzes von Downlink-Benutzerdatenkanäle mit Hilfe einer sukzessiven Ausführung einer Auswahl einer geeigneten Anzahl aus den Downlink-Benutzerdatenkanälen **durch** sukzessives Anwenden von mehr als einem AuswahlKriterium.

**13.** Verfahren nach einem der vorangehenden Ansprüche, **gekennzeichnet durch**

Ausführen des Verfahrens bei regelmäßigen Zeitintervallen, die beträchtlich länger als die Berichtsintervalle für Funkkanalparameter von den Benutzergeräten sind.

**14.** Verfahren nach Anspruch 4, **gekennzeichnet durch**

Initiieren eines Handovers an eine benachbarte Zelle für ein Benutzergerät, das den höchsten Pfadverlust aufweist.

**Revendications**

**1.** Procédé, dans un système de télécommunication comprenant une pluralité de stations de base (12, 17a, 17b) dont chacune fournit des services de communication à un nombre sélectionné d'équipements d'utilisateur (13a, 13b, 13c, 13d) au moyen de canaux de liaison descendante alloués (14a, 14b, 14c, 14d), dont des services de communication de données sont fournis à une partie desdits équipements d'utilisateur au moyen de canaux de données d'utilisateur de liaison descendante présentant un débit binaire initial assigné,
**caractérisé par**:

la réalisation, dans chaque station de base, selon des intervalles temporels réguliers, des étapes de:

estimation de la puissance de liaison descendante allouée totale à partir de tous les canaux de liaison descendante d'une station de base (33);
sélection (351, 361) de tous les canaux de données d'utilisateur de liaison descendante ou d'un sous-jeu afférent afin d'activer de façon momentanée des utilisateurs si ladite puissance de liaison descendante allouée totale diffère d'un niveau de puissance de liaison descendante maximum autorisé d'une station de base; et
réglage de la puissance de liaison descendante allouée totale au niveau de puissance de liaison descendante maximum autorisé au moyen du réglage du débit binaire (352, 362) pour lesdits canaux de données d'utilisateur de liaison descendante sélectionnés.

**2.** Procédé selon la revendication 1, **caractérisé par** la sélection de tous les canaux de données d'utilisateur de liaison descendante ou d'un sous-jeu afférent si ladite puissance de liaison descendante allouée totale excède ledit niveau de puissance de liaison descendante maximum autorisé d'une station de base; et
réglage des canaux de données d'utilisateur de liaison descendante sélectionnés au moyen de l'assignation d'un débit binaire plus faible.

**3.** Procédé selon la revendication 2, **caractérisé par** la sélection d'un sous-jeu de canaux de données d'utilisateur de liaison descendante au moyen de la sélection d'un nombre approprié de canaux parmi les canaux de données d'utilisateur de liaison descendante présentant un débit binaire assigné qui excède une valeur de seuil.

**4.** Procédé selon la revendication 2, **caractérisé par** la sélection d'un sous-jeu de canaux de données d'utilisateur de liaison descendante au moyen de la sélection d'un nombre approprié de canaux parmi les canaux de données d'utilisateur de liaison descendante présentant une perte de voie qui excède une valeur de seuil.

**5.** Procédé selon la revendication 2, **caractérisé par** la sélection d'un sous-jeu de canaux de données d'utilisateur de liaison descendante au moyen de la sélection d'un nombre approprié de canaux parmi les canaux de données d'utilisateur de liaison descendante pour les utilisateurs sans un type d'abonnement à débit privilégié.

6. Procédé selon la revendication 1, **caractérisé par** la sélection de tous les canaux de données d'utilisateur de liaison descendante ou par un sous-jeu afférent si ladite puissance de liaison descendante allouée totale est inférieure audit niveau de puissance de liaison descendante maximum autorisé d'une station de base; et
le réglage des canaux de données d'utilisateur de liaison descendante sélectionnés au moyen de l'assignation d'un débit binaire plus élevé.

7. Procédé selon la revendication 6, **caractérisé par** la sélection d'un sous-jeu de canaux de données d'utilisateur de liaison descendante au moyen de la sélection d'un nombre approprié de canaux parmi les canaux de données d'utilisateur de liaison descendante présentant un débit binaire assigné qui est inférieur à une valeur de seuil.

8. Procédé selon la revendication 6, **caractérisé par** la sélection d'un sous-jeu de canaux de données d'utilisateur de liaison descendante au moyen de la sélection d'un nombre approprié de canaux parmi les canaux de données d'utilisateur de liaison descendante présentant une perte de voie qui est inférieure à une valeur de seuil.

9. Procédé selon la revendication 6, **caractérisé par** la sélection d'un sous-jeu de canaux de données d'utilisateur de liaison descendante au moyen de la sélection d'un nombre approprié de canaux de façon essentielle parmi les canaux de données d'utilisateur de liaison descendante pour les utilisateurs disposant d'un type d'abonnement à débit privilégié.

10. Procédé selon la revendication 2 ou 6, **caractérisé par**
la sélection d'un sous-jeu de canaux de données d'utilisateur de liaison descendante au moyen d'une sélection cyclique d'une plage appropriée parmi des valeurs d'index indiquant les positions de début des tampons de transmission de liaison descendante pour lesdits canaux de données d'utilisateur de liaison descendante.

11. Procédé selon la revendication 2 ou 6, **caractérisé par**
la sélection d'un sous-jeu de canaux de données d'utilisateur de liaison descendante au moyen d'une sélection de façon aléatoire d'un nombre approprié de canaux de données d'utilisateur de liaison descendante.

12. Procédé selon l'une des revendications précédentes, **caractérisé par**
la sélection d'un sous-jeu de canaux de données d'utilisateur de liaison descendante au moyen de la réalisation en succession d'une sélection d'un nombre approprié de canaux parmi les canaux de données d'utilisateur de liaison descendante en appliquant en succession plus d'un critère de sélection.

13. Procédé selon l'une des revendications précédentes, **caractérisé par**
la réalisation dudit procédé selon des intervalles temporels réguliers qui sont considérablement plus longs que les intervalles de rapport pour des paramètres de canal radio en provenance des équipements d'utilisateur.

14. Procédé selon la revendication 4, **caractérisé par** l'initiation d'un transfert sur une cellule voisine pour un équipement d'utilisateur présentant la perte de voie la plus élevée.

# Fig. 1

Fig. 2

Fig. 3